# EUROPEAN PATENT SPECIFICATION

(11) **EP 3 621 049 B1**
(45) Date of publication and mention of the grant of the patent: **11.10.2023**
(21) Application number: 19193778.8
(22) Date of filing: 27.08.2019
(51) Int. Cl.: G08B 21/22, G08B 21/24, B60N 2/00

(54) **VEHICLE MANAGEMENT SYSTEM AND METHOD OF OPERATING THE VEHICLE MANAGEMENT SYSTEM**
FAHRZEUGMANAGEMENTSYSTEM UND VERFAHREN ZUM BETRIEB VON DEM FAHRZEUGMANAGEMENTSYSTEM
SYSTÈME DE GESTION DE VÉHICULES ET PROCÉDÉ DE FONCTIONNEMENT DU SYSTÈME DE GESTION DE VÉHICULES

(30) Priority: 04.09.2018 US 201816120959
(43) Date of publication of application: 11.03.2020
(73) Proprietor: BlackBerry Limited, Waterloo, Ontario N2K 0A7 (CA)
(72) Inventor: ADAMS, Neil Patrick, Waterloo, Ontario N2K 0A7 (CA); BELLS, Matthew, Waterloo, Ontario N2K 0A7 (CA)
(74) Representative: Murgitroyd & Company

(56) References cited:
- US-A1- 2004 155 783
- US-A1- 2016 297 325
- US-B1- 6 922 147
- US-B1- 7 170 401
- US-B1- 9 014 920

## Description

### FIELD

The present application generally relates to vehicle management systems and, in particular to a system and a method of operating a vehicle management system in a vehicle.

### BACKGROUND

Adults can unintentionally leave children or pets in parked vehicles with all windows closed. Alternatively, unbeknownst to adult caregivers, children can play in unattended vehicles and become enclosed within parked and non-operating vehicles.

Extreme external environmental conditions can translate into unsafe vehicle interior conditions. For example, when the outside temperature exceeds 27°C or drops below 0°C, a vehicle with all windows closed can warm up to high vehicle interior temperatures or drop below freezing vehicle interior temperatures in the span of several minutes. A child or pet trapped within the vehicle can experience vehicular heatstroke or hypothermia. A bystander or first responder noticing the child or pet trapped within the vehicle may not be able to access the vehicle when locked. It would be advantageous to provide for systems and methods that minimize the occurrences of such situations relating to unsafe vehicle interior conditions.

The document US 7,170,401 B1 discloses a system that detects the presence of an unattended child within a vehicle and when the child is so detected, disables the vehicle's door locks by preventing doors from being locked or remaining locked and sounds an alarm.

The document US 6, 922,147 B1 discloses various systems and methods for reducing the likelihood of leaving an unattended child behind in an infant/child seat in a vehicle.

### SUMMARY

Accordingly there is provided a method, a vehicle management system and a computer program as defined in the claims that follow.

### BRIEF DESCRIPTION OF THE DRAWINGS

Reference will now be made, by way of example, to the accompanying drawings which show example embodiments of the present application, and in which:
FIG. 1 illustrates, in block diagram form, a vehicle management system for managing vehicle lock requests for vehicles, in accordance with an example of the present application;
FIG. 2 illustrates an overhead, sectional view of a vehicle having the system of FIG. 1 installed therein;
FIG. 3 illustrates, in flowchart form, a method of operating a vehicle management system in a vehicle, in accordance with an example of the present application;
FIG. 4 illustrates, in flowchart form, a method of operating a vehicle management system in a vehicle, in accordance with another example of the present application;
FIG. 5 illustrates a simplified block diagram of a vehicle management system, in accordance with an example of the present application; and
FIG. 6 illustrates a simplified block diagram of a remote device, in accordance with an example of the present application.
Similar reference numerals may have been used in different figures to denote similar components.

### DESCRIPTION OF EXAMPLE EMBODIMENTS

In a first aspect, the present application describes a method of operating a vehicle management system in a vehicle. The vehicle includes an operator zone and a passenger zone. The method comprises: detecting that the operator zone is unoccupied; determining that the passenger zone is occupied while the operator zone is unoccupied to identify that the vehicle is in a non-driver occupied mode; receiving from an electronic key of the vehicle, a vehicle lock request signal, the vehicle lock request signal sent in response to pressing of a first button on the electronic key of the vehicle; and in response to receiving the vehicle lock request signal while the vehicle is in the non-driver occupied mode, disabling a vehicle lock actuator to prevent locking of a vehicle door; and providing an audible or visual alert for notifying the vehicle operator of the non-driver occupied mode; receiving, from the electronic key of the vehicle, an actuator override signal allowing the lock actuator of the vehicle to operate irrespective of vehicle occupancy state, the actuator override signal sent in response to pressing of a second button on the electronic key of the vehicle, the second button being different than the first button; and in response to receiving the actuator override signal, activating the lock actuator of the vehicle to lock the door of the vehicle.

In another aspect, the present application describes a vehicle management system in a vehicle. The vehicle includes an operator zone and a passenger zone. The vehicle management system includes a processor; a memory coupled to the processor; a vehicle actuator coupled to the processor for locking a vehicle door; and an occupancy manager. The occupancy manager includes processor-executable instructions stored in the memory that, when executed, cause the processor to: determine that the operator zone is unoccupied; determine that the passenger zone is occupied while the operator zone is unoccupied to identify that the vehicle is in a non-driver occupied mode; receive from an electronic key of the vehicle a vehicle lock request signal sent in response to pressing of a first button on the electronic key of the vehicle; and in response to receiving the vehicle lock request signal while the vehicle is in the non-driver occupied mode, disable the vehicle lock actuator to prevent locking of the vehicle door; and provide an audible or visual alert to notify the vehicle operator of the non-driver occupied mode; receive, from the electronic key of the vehicle, an actuator override signal allowing the lock actuator of the vehicle to operate irrespective of vehicle occupancy state, the actuator override signal sent in response to pressing of a second button on the electronic key of the vehicle, the second button being different than the first button; and in response to receiving the actuator override signal, activate the lock actuator of the vehicle to lock the door of the vehicle.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

Adults sometimes unintentionally leave children or pets in parked vehicles with all windows closed. Alternatively, unbeknownst to adult caregivers, children can play in unattended vehicles and become enclosed within parked and non-operating vehicles.

Extreme external environmental conditions can translate into unsafe vehicle interior conditions. Extreme external environmental conditions can translate into unsafe vehicle interior conditions. For example, when the outside temperature exceeds 27°C or drops below 0°C, a vehicle with all windows closed can warm up to high vehicle interior temperatures or drop below freezing vehicle interior temperatures in the span of several minutes. When a child or pet is enclosed within the vehicle having high or low vehicle interior temperatures, the child or pet can experience vehicular heatstroke or hypothermia. A bystander or first responder noticing the child or pet that is trapped within the vehicle may not be able to access the vehicle when locked. In some scenarios, the bystander may attempt to break a vehicle window for extricating that child or pet.

It is desirable to provide for improved vehicle management systems and methods of operating the vehicle management systems to minimize occurrences of such situations relating to unsafe vehicle interior conditions. Such systems and methods are now devised.

Vehicles can include one or a combination of sensors, such as safety belt engagement sensors, seat weight sensors, image sensors, or motion sensors. The vehicle can include a designated occupant seat in an operator zone for a vehicle operator and one or more occupant seats for a passenger zone. The respective occupant seats can be associated with a safety belt and one or more seat sensors. To prevent unsafe vehicle conditions described herein, it is desirable to prevent locking of the vehicle when passenger occupants, such as a child or a pet, are unintentionally left within the vehicle while the vehicle operator, such as an adult caregiver, may leave the vehicle. As will be described, the vehicle can include a vehicle management system configured to monitor one or more sensors for determining vehicle occupancy in respective vehicle zones and, in response to the monitoring, manage vehicle lock requests to prevent unsafe vehicle conditions. As will be described, the vehicle management system is configured to manage door actuators for allowing or preventing opening of vehicle doors.

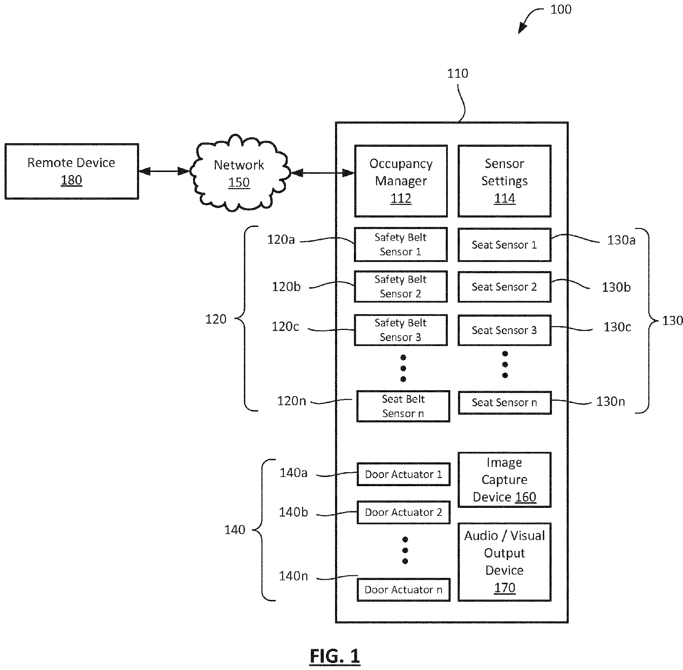

Reference is made to FIG. 1, which illustrates, in block diagram form, a system 100 for managing lock requests for a vehicle, in accordance with an example of the present application. The system 100 includes a vehicle management system 110 that is installed within a vehicle and can include a remote device 180.

In examples described herein, vehicles are motor vehicles (e.g., automobiles, cars, trucks, buses, etc.), aircrafts (e.g., airplanes, aerial vehicles, aircraft systems, helicopters, etc.), spacecrafts (e.g., spaceplanes, space shuttles, space capsules, space stations, satellites, etc.), watercraft (e.g., ships, boats, hovercraft, submarines, etc.), railed vehicles (e.g., trains, trams, etc.), or other types of vehicles including any combinations of the foregoing.

The vehicle includes an operator zone and a passenger zone. The operator zone includes a vehicle operator seat and the passenger zone can include one or more passenger seats. The respective seats include a safety belt. Safety belts are devices for securing a vehicle occupant within the vehicle to minimize movement of the vehicle occupant in the event of a vehicle collision. In many countries or regions, vehicle occupants are required by laws or regulations to wear a safety belt while the vehicle is in operation or motion.

The vehicle management system 110 is installed within a vehicle and can be a single computing device, multiple computing devices, or other arrangement of computing devices for executing example operations described herein. The vehicle management system 110 includes one or more processors and memory.

For detecting whether safety belts are used within the vehicle, the vehicle management system 110 can include one or more safety belt engagement sensors 120 (illustrated individually as 120a, 120b, 120c, ..., 120n). Safety belt engagement sensors 120 can identify whether respective buckle ends of a safety belt are secured together. For example, a safety belt can include a safety belt tongue receivable within a safety belt buckle for securing a safety belt around a vehicle occupant. Safety belt engagement sensors can detect whether a safety belt tongue is received within a corresponding safety belt buckle. A vehicle occupant inserts a safety belt tongue within a corresponding safety belt buckle to secure a safety belt around the vehicle occupant. Based on the premise that the vehicle occupant will secure the safety belt around the vehicle occupant while occupying the vehicle, the vehicle management system can monitor safety belt engagement sensors as one method for determining that the vehicle seat associated with the safety belt is occupied. It can be appreciated that the vehicle monitoring system 110 may utilize other sensors in addition to or in place of the seat belt engagement sensors for determining vehicle occupancy.

In FIG. 1, a first safety belt sensor 120a can be associated with an operator zone or a driver seat. When the vehicle management system 110 detects that a safety belt tongue is received within a safety belt buckle of the first safety belt sensor 120a, the vehicle management system 110 can determine that a vehicle driver is occupying the operator zone (e.g., the vehicle driver is sitting in the driver seat). The second safety belt sensor 120b, the third safety belt sensor 120c, or the n^{th} safety belt sensor 120n can be associated with respective passenger seats within the vehicle. When the vehicle management system 110 detects that respective safety belt tongues are received within a corresponding safety belt buckle of the respective safety belts, the vehicle management system 110 can determine that vehicle passengers are located in the respective passenger zones of the vehicle.

The vehicle management system 110 can include seat sensors, such as a first seat sensor 130a, a second seat sensor 130b, a third seat sensor 130c, or an n^{th} seat sensor 130n. The seat sensors can be installed at and associated with respective seats within the vehicle. The seat sensors can be weight sensors configured to detect weight applied on a seating surface of a respective vehicle seat. For example, when the vehicle driver is seated in the operator seat of the operator zone, the vehicle management system 110 can detect that weight is atop the operator seat.

To prevent false positive identification of vehicle occupants, the vehicle management system 110 identifies that a seat is occupied when the weight atop the respective seat exceeds an occupant weight threshold or a threshold weight amount. For example, if a book bag is plated atop the operator seat, weight of the book bag may not exceed the threshold weight amount and the vehicle management system 110 would not identify the book bag as a vehicle occupant. When a person sits atop a vehicle seat, the vehicle management system 110 can determine that the weight of the person may be greater than 30 kilograms of weight and the vehicle management system 110 identifies that the person is occupying the vehicle seat. It can be contemplated that any other occupant weight threshold can be set, and that the 30 kilogram threshold weight amount is an example.

In some examples, the vehicle management system 110 can be configured to tare, or zero, the seat weight sensors allowing the vehicle management system 110 to detect the weight of an infant or a young child sitting within the child car seat. For example, a child car seat can weigh 10 kilograms and an infant or a young child can weigh 3 or more kilograms. When an adult caregiver installs the child car seat within the vehicle, the vehicle management system 110 can be configured to tare the weight of the child car seat and set an occupant weight threshold for the seat weight sensor at that vehicle occupant seat.

In some examples, the vehicle management system 110 can utilize both safety belt sensors 120 and seat sensors 130 for validating whether a person is occupying a seat within a vehicle. For example, the vehicle management system 110 can utilize both the status of the seat belt buckles (e.g., buckled or unbuckled) and the weight atop the operator seat, in combination, to determine whether a vehicle driver is occupying the operator zone. When utilizing safety belt sensors and seat sensors for validating seat occupancy, the vehicle management system 110 can prevent false positive identification that a vehicle seat is occupied. For example, when a potted plant is placed on a passenger seat and a seat belt is used to fasten the potted plant for transport, the potted plant may not exceed the occupant weight threshold and the vehicle management system 110 will not identify that seat as occupied.

The above described example includes utilizing the combination safety belt sensors 120 and seat sensors 130 for determining vehicle occupancy; however, in some examples, the vehicle management system 110 can be configured to utilize a single set of sensors, such as solely the seat sensors 130 for determining vehicle occupancy. For example, some child seats are secured to vehicle seats using a latch system that is independent of the vehicle safety belts. As a safety belt may not be used for securing the child seat within a passenger zone, the vehicle management system 110 can be configured to detect seat sensors 130 for determining vehicle occupancy.

The vehicle management system 110 includes door actuators 140, such as a first door actuator 140a, a second door actuator 140b, or a n^{th} door actuator 140n. The vehicle door lock actuators 140 are electromechanical or mechanical devices that interact with door latches for allowing or preventing opening of vehicle doors. In response to receiving a vehicle lock request signal, the vehicle management system 110 can configure one or more vehicle lock actuators to lock vehicle doors. The first door actuator 140a can be associated with a vehicle door associated with an operator zone or a driver's seat. The second door actuator 140b or the nth door actuator 140n can be associated with one or more non-operator doors (e.g., passenger doors, trunk or hatch doors) associated with respective one or more passenger zones or passenger seats. In some examples, a door actuator can be associated with a cargo zone or a vehicle trunk and the vehicle management system 110 can configure that door actuator to lock the door associated with the cargo zone.

The vehicle management system 110 includes an occupancy manager 112. The occupancy manager 112 includes processor-executable instructions to determine operator zone or passenger zone occupancy based on at least one of safety belt sensors or seat sensors or other system inputs according to example operations described herein. Further, the occupancy manager 112 can include processor-executable instructions for disabling vehicle lock actuators to prevent locking of vehicle doors in scenarios where unsafe vehicle conditions may result in time

The vehicle management system 110 can also include sensor settings 114. The sensor settings 114 are stored in memory of the vehicle management system 110 and can include configuration details for sensors, such as occupant weight threshold amounts associated with respective seat sensors, or image or thermographic camera settings for distinguishing persons or pets from inanimate objects that may be within a vehicle.

The vehicle management system 110 can include an image capture device 160. The image capture device 160 can be configured to capture still images or video images of the vehicle interior. The vehicle management system 110 can be configured to determine whether an operator zone or passenger zones is occupied based on captured images using image recognition operations. For example, image recognition operations can include processor-executable instructions for distinguishing human or pet occupants from inanimate objects, such as stuffed animals or other cargo items.

In some examples, the image capture device 160 is a thermographic camera or infrared device and the vehicle management system 110 is configured to determine whether the operator zone or passenger zone is occupied based on infrared thermography operations. For example, the thermographic camera can detect infrared energy emitted by a person or a pet, convert the thermal energy into a temperature value, and providing the results for determining whether the operator zone or passenger zone is occupied.

In some other examples, the image capture device 160 can include a depth of field (DOF) image sensor. That is, the image capture device 160 can be a stereo imaging device, a time of flight (TOF) sensor, or structured light imaging device for detecting motion within the vehicle or for detecting a presence of human or pet occupants within the passenger zone. The image capture device 160 can include one or a combination of the above exemplified image sensors for detecting a presence of human or pet occupants within the passenger zone.

The vehicle management system 110 includes one or more audio / visual output devices 170. For example, audio output devices include horns, sirens, or loudspeakers configured for providing acoustic output to alert the vehicle operator of vehicle status. For example, the audio output device can provide chirps or other sounds when the vehicle doors transition from an unlocked to a locked state. In other examples, the audio output device can provide sounds when the vehicle management system 110 receives a vehicle lock request signal but suppresses the vehicle lock request signal when the vehicle management system 110 is configured to prevent locking of vehicle doors when doing so would promulgate an unsafe scenario (as in examples described herein).

The vehicle management system 110 can include a communication subsystem for wireless data communication allowing data to be transmitted to or received from other devices via a network 150. The vehicle management system 110 communicates via the network 150 with a remote device 180, such as an electronic key device or other mobile device. The network 150 can include a plurality of interconnected wired or wireless networks, including the Internet, wireless local area networks, cellular networks, or personal area networks, or the like. In some examples, the communication subsystem is a short-range communication subsystem for establishing a communication channel with remote devices that are detected proximal to the vehicle having the vehicle management system 110.

In some examples, the remote device 180 is a computing device having a processor, memory, and communication capabilities and is an electronic key device operable by a vehicle operator for transmitting signals to the vehicle management system 110 or for receiving signals from the vehicle management system 110. For instance, the remote device 180 can transmit a vehicle lock request signal to the vehicle management system 110 for triggering door actuators to lock vehicle doors. The remote device 180 can also transmit a vehicle trunk release signal to the vehicle management system 110 to allow a vehicle occupant to access the vehicle trunk. The remote device 180 can also include a panic button for transmitting a panic signal to the vehicle management system 110 to cause the vehicle to activate a series of audible horn blasts or tones or to illuminate the vehicle lighting system for drawing attention to the vehicle.

In some other examples, the remote device can be another endpoint including one or more of any of the following: mobile devices (e.g., smartphones, tablets, phablets, wearables, gaming devices, etc.), computers (e.g., laptops, all-in-one computers, thin-client devices, etc.), IoT (Internet of Things) devices (e.g., smart devices, connected devices, etc., or other similar computing devices or combination thereof.

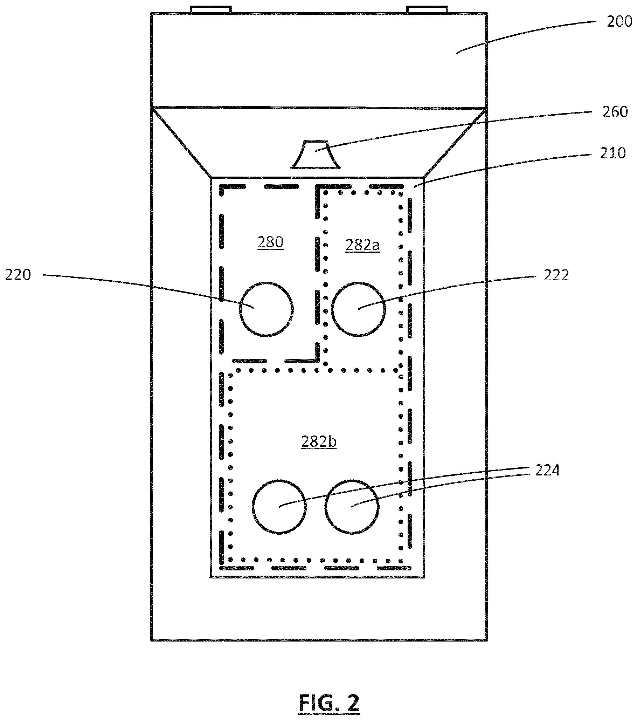

Reference is made to FIG. 2, which illustrates an overhead sectional view of a vehicle 200 having the vehicle management system 110 of FIG. 1 installed therein, in accordance with an example of the present application. The vehicle 200 has a vehicle occupant cabin 210 that includes a plurality of vehicle seats, such as the operator seat 220, a front passenger seat 222, and rear passenger seats 224. In some examples, the operator seat 220 is associated with an operator zone 280, which can be a volume of space in the front left portion of the vehicle 200 of FIG. 2 where a vehicle driver may sit while operating the vehicle. The operator zone 280 may be associated with a first safety belt sensor 120a (FIG. 1) or a first seat sensor 130a (FIG. 1). The vehicle management system 110 can utilize the first safety belt sensor 120a and the first seat sensor 130a for determining whether the operator zone 280 is occupied.

Similarly, passenger seats, such as the front passenger seat 222 or rear passenger seats 224 can associated with one or more passenger zones. For example, the front passenger seat 222 can be associated with a first passenger zone 282a, which can be a volume of space in the front right portion of the vehicle 200 of FIG. 2 where a person or a pet may sit while the vehicle is in motion. The first passenger zone 282a can be associated with a second seat belt sensor 120b (FIG. 1) or a second seat sensor 130b (FIG. 1).

Further, rear passenger seats 224 can be associated with a second passenger zone 282b, which is a volume of space in the rear of the vehicle 200 where other persons or pets may sit while the vehicle is in motion. The second passenger zone 282b can be associated with safety belt sensors for detecting whether respective buckles of safety belts are joined and can be associated with seat sensors for detecting whether the weight atop a respective rear passenger seat exceeds a threshold weight amount. The vehicle management system 110 can utilize the safety belt sensors or seat sensors for determining whether the respective operator or passenger zones are occupied.

It can be appreciated that location of the operator seat 220 or the operator zone 280 can be different than that described in the example above. The example above describes the operator seat 220 being in a volume of space in the front left portion of the vehicle; however, in some countries or in some vehicle types, the operator seat 220 may be in a volume of space in the front right portion of the vehicle or in any other relative positional space of the vehicle.

In FIG. 2, the vehicle 200 includes a plurality of sub-zones, such as the first passenger zone 282a and the second passenger zone 282b. Although two passenger zones are illustrated in FIG. 2, the vehicle 200 can be sub-divided into any number of sub-zones, and the vehicle management system 110 can determine that a passenger zone of the vehicle is occupied when at least one of the plurality of sub-zones is determined to be occupied. For example, each of a plurality of vehicle seats can be associated with an individual passenger zone (e.g., one passenger zone per passenger seat) and the processor determines that a vehicle passenger zone including the individual subzones is occupied when at least one of the individual subzones is occupied. In another example, a plurality of non-operator seats can be associated with a single passenger zone and the processor can determine that the passenger zone is occupied if at least one of the plurality of non-operator seats is occupied.

The vehicle 200 in FIG. 2 also includes an image capture device 260 for capturing one or more images of the operator zone and the passenger zone. In some examples, the image capture device 260 captures images at periodic time intervals and stores the captured images in memory. In some other examples, the image capture device 260 captures images upon detecting movement or motion within the vehicle interior. The image capture device 260 is positioned at a central, front location of the vehicle 200; however, in some examples, the image capture device 260 can be positioned at any other location for capturing images of the operator zone or the passenger zone.

As described, external environmental conditions can cause unsafe vehicle interior environmental conditions. For example, when the outside temperature exceeds 27°C, with all windows closed, a vehicle can quickly warm up to vehicle interior temperatures that far exceed 27°C in the span of several minutes. Adults can unintentionally leave children or pets in parked vehicles. The children or pets can be enclosed within the vehicle and can experience vehicle heatstroke or other medical condition associated with extreme conditions within a vehicle interior. That is, extreme external environmental conditions can translate into unsafe vehicle interior conditions. When a bystander notices that a child or a pet may be enclosed within a parked, non-operating vehicle, the bystander or first responders may be unable to access the locked vehicle without breaking a window or otherwise damaging the vehicle. In such time sensitive scenarios, the bystander or the first responder may break a vehicle window for accessing the vehicle interior for removing the enclosed child or pet that may have been unintentionally left within the parked, non-operating vehicle. Accordingly, it is desirable to provide systems and methods of managing lock requests for vehicles to prevent the above described unsafe vehicle conditions.

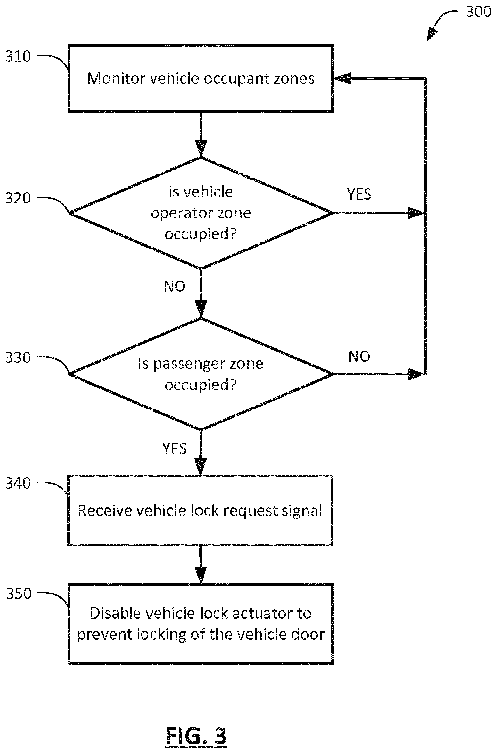

Reference is now made to FIG. 3, which illustrates, in flowchart form, a method 300 of operating the vehicle management system 110 (FIG. 1) for managing access to a vehicle, in accordance with an example which is not included within the scope of the claims. The method 300 includes operations carried out by one or more processors of the vehicle management system 110. The method 300 may be implemented, at least in part, through processor-executable instructions of the occupancy manager 112 (FIG. 1). In some examples, one or more of the operations are implemented via processor-executable instructions in other applications or an operating system stored and executed in memory of the vehicle communication system 110. The vehicle includes an operator zone 280 (FIG. 2) and one or more passenger zones 282a, 282b (FIG. 2).

At operation 310, the processor monitor occupant zones. The processor can determine based on signals received from one or more sensors or input devices whether the operator zone or the one or more passenger zones may be occupied. As described herein, the processor can determine based on signals received from safety belt sensors 120 whether a safety belt tongue is received within a safety belt buckle for securing a safety belt around a vehicle occupant. The processor can also determine based on signals received from seat sensors whether weight exceeding a threshold weight amount or occupant weight threshold is detected atop one or more of the seats associated with the operator zone or the passenger zones within the vehicle. The processor can in addition or alternatively utilize an image capture device 160 or other input sensors, such as infrared sensors, microphones, etc. for determining whether a person or pet is occupying one or more passenger zones.

The processor monitors occupant zones by receiving signals from the plurality of sensors or system inputs and identifies whether signals from any of the sensors indicate that the vehicle operator zone or the passenger zone(s) is occupied.

At operation 320, the processor determines whether the vehicle operator zone is occupied. When the processor determines that the vehicle operator zone is occupied, the processor continues, at operation 310, to monitor the occupant zones via the sensors or device inputs described herein. As the vehicle operator is typically an adult occupant having control of the vehicle, when the vehicle operator zone is occupied, the vehicle is unlikely to be in an unsafe condition. Thus, when the vehicle operator zone is occupied, the vehicle management system 110 may continue, at operation 310, to monitor occupant zones.

In a specific example scenario, a young child can be enclosed within a vehicle with the windows closed and the young child may have climbed into the operator zone 280 (FIG. 2). In this specific scenario, because the young child may have climbed into the operator zone 280, the vehicle management system 110 may not determine that the vehicle is in a non-driver occupied mode at least because the child is occupying the seat in the operator zone 280. As the child may not open the vehicle doors and continue to be immersed in the unsafe vehicle interior condition, the vehicle management system 110 can be configured to periodically determine a vehicle interior temperature over a period of time. In response to determining that the vehicle interior temperature exceeds a threshold temperature, the processor can activate at least one window actuator for opening a vehicle window. In the present example, the child has climbed into the operator zone 280 and processor will not recognize that the vehicle is, nonetheless, in the non-driver vehicle occupied mode. Thus, to ameliorate the risk associated with the processor not identifying the non-driver occupied mode, the processor can activate the window actuators for opening windows and alleviating the extreme vehicle interior conditions. In another example, the vehicle management system 110 can be configured to periodically determine that the vehicle interior temperature decreases below a cold threshold temperature. Upon determining that the vehicle interior temperature decreases below the cold threshold temperature, the vehicle management system 110 can activate a vehicle heating component for heating the vehicle interior.

As described herein, the vehicle management system 110 can include an imaging device for capturing images of the operator zone and the processor can capture an image of the operator zone in the vehicle and determine whether the operator zone is occupied based on the captured image. The processor can determine whether the operator zone is occupied by determining using image recognition operations whether the operator zone is occupied. For example, image recognition operations can distinguish persons or pets from inanimate objects, such as large parcels or stuffed toys.

In some examples, the vehicle management system includes a thermographic camera and the processor can determine whether the operator zone is occupied based on infrared thermography operations for determining whether the operator zone is occupied. In some examples, the vehicle management system includes an operator seat weight sensor and the processor can determine that the operator zone is occupied by determining that an object weight in the operator zone exceeds an occupant weight threshold. In some examples, the vehicle management system includes a safety belt engagement sensor associated with the operator zone and the processor determines whether the operator zone is occupied based on whether the safety belt associated with the operator seat is engaged or in use.

At operation 320, the processor can detect that the operator zone is unoccupied by detecting that a vehicle engine transitions from an operating mode to a shutdown mode. For example, a vehicle operator can shut down the vehicle engine by turning an ignition switch to an off position. Based on transitioning the vehicle engine from the operating mode to the shutdown mode, the processor can determine that the operator zone will likely to be vacated within a short period of time. However, in some scenarios, the vehicle operator may choose to transition the vehicle engine from the operating mode to the shutdown mode and stay within the vehicle.

Thus, to avoid a false positive identification that the operator zone is vacated when the operator zone may still be occupied, at operation 320, the processor can also detect that the operator zone is unoccupied by detecting that an operator access door associated with the operator zone is opened and, subsequently, closed after the vehicle engine transitions from the operating mode to the shutdown mode. In this example, the combination of determining that: (i) the vehicle engine transitions from the operating mode to the shutdown mode and, subsequently, (ii) the operator access door associated with the operator zone is opened and, thereafter, closed, the vehicle management system 110 can determine with increased confidence that the operator zone is likely unoccupied. At operation 320, the processor can utilize one or a combination of the other above described operations based on sensor or system inputs for detecting that the operator zone is unoccupied.

When the processor, at operation 320, detects that the operator zone is unoccupied, the processor, at operation 330, determines whether the passenger zone (see e.g., 282a, 282b of FIG. 2) is occupied. If the processor determines that the passenger zone is unoccupied, the processor can, at operation 310, continue to monitor the occupant zones for changes in occupancy status.

At operation 330, when the processor determines that the passenger zone is occupied while the operator zone is unoccupied, the processor identifies that the vehicle is in a non-driver occupied mode. For example, a caregiver/operator may unintentionally leave a child or a pet within a parked vehicle. That is, the caregiver may have exited the operator zone 280 (FIG. 2), attempted to lock the vehicle, and walked away to run errands placing the vehicle in a non-driver occupied mode. In the scenario when the outside temperature exceeds 27°C, the temperature of the vehicle can rapidly exceed the outside temperature in a very short period of time (e.g., within minutes) and the humidity of the vehicle interior can be low (e.g., dry). Thus, the external environmental conditions can contribute to unsafe vehicle interior conditions and a child or pet that may be unattended to may experience heatstroke.

In the above described scenario where the caregiver / vehicle operator may have attempted to lock the vehicle without realizing that the child or pet may still be in the vehicle, the vehicle management system can prevent locking of the vehicle doors and can provide an audible or visual alert to the caregiver / vehicle operator that a passenger occupant may have been forgotten in the vehicle.

At operation 330, the processor can determine that the passenger zone is occupied based on one or a combination of inputs of the vehicle management system 110. For example, the vehicle can include an imaging device for capturing images of the passenger zone, and the processor can periodically capture images of the passenger zone and determine whether the passenger zone is occupied based on the captured image using image recognition operations. In some other examples, the processor can utilize motion detection operations for determining whether the passenger zone is occupied. For instance, the processor can conduct comparison operations on the periodically captured images for detecting movement or motion of vehicle occupants within the vehicle.

In another example, at operation 330, the vehicle management system 110 can determine that the passenger zone is occupied by determining that an access door associated with a non-operator zone is opened and, subsequently, closed prior to starting the vehicle engine. That is, a caregiver may place the child into a car seat located in the second passenger zone 282b (FIG. 2) prior to entering the operator zone 280 (FIG. 2) and starting the vehicle engine. Thus, the vehicle management system 110 determines that the passenger zone is likely occupied by identifying a sequence of access door movement and engine starting events that indicate a good likelihood that the passenger zone is occupied.

In another example, at operation 330, the vehicle management system can determine that the passenger zone is occupied using seat weight sensors. For example, the processor can determine that the passenger zone is occupied by determining that an object weight atop a seat in a first passenger zone 282a or a second passenger zone 282b exceeds a occupant weight threshold.

In another example, the vehicle management system 110 includes a safety belt engagement sensor and the processor, at operation 330, determines whether a safety belt associated with one or more seats in the first passenger zone 282a or the second passenger zone 282b is fastened around a vehicle occupant. For example, the processor can determine, using a safety belt engagement sensor, whether a safety belt tongue is received within a safety belt buckle. When the safety belt tongue is received within a safety belt buckle for a safety belt associated with a passenger zone, the processor can determine that the seat associated with the safety belt is likely occupied.

It can be appreciated that in some scenarios, determining whether a passenger seat or zone is occupied based on safety belt engagement sensors may not be appropriate where a child safety seat is used. For example, some child seats are secured to a vehicle seat using a latch belt system and the safety belt associated with that vehicle seat is not used for securing the child seat to the vehicle seat. In another example, a child seat can secure a young child to the child seat using an integrated child seat safety belt, while the child seat base unit is secured to the vehicle seat using the vehicle safety belt. In the present example, because the child seat base unit is secured to the vehicle seat using the vehicle safety belt, whether a safety belt tongue is received within a safety belt buckle is not an accurate proxy for determining whether the vehicle seat is occupied. Thus, in some examples, the vehicle management system 110 needs to be configured to determine vehicle occupancy using other or additional sensors and methods, as described herein.

In some examples, a portable infant carrier that is intended to be removed each time a newborn or infant is removed from the vehicle can have a radio frequency identification tag (or other similar short-range identification tag) affixed thereto. Further, a pet collar can have a radio frequency identification tag affixed thereto. The short-range identification tags can be active or passive sensor tags. When such short-range identification tags are affixed to infant carriers or pet collars, at operation 330, the vehicle management system 110 can determine that the passenger zone is occupied when one or more radio frequency identification tags affixed to the portable infant carrier or pet collar is detected within boundaries of the passenger zone of the vehicle.

To prevent an unsafe condition from occurring, when the vehicle management system 110 determines that the vehicle is in the non-driver occupied mode, the vehicle management system 110 can prevent the vehicle from being locked and can provide audio and/or visual notifications to the vehicle operator that they may have forgotten a child or pet within the vehicle.

In particular, at operation 340, the processor can receive a vehicle lock request signal and, in response to receiving the vehicle lock request signal while the vehicle is in the non-driver occupied mode, at operation 350, the processor disables the vehicle lock actuators to prevent locking of the vehicle doors. When the processor determines that the vehicle is in a non-driver occupied mode, the processor disables vehicle lock actuators to prevent locking of vehicle doors. In some examples, before the operator continues leaving the vehicle, the operator is warned that the vehicle was prevented from locking. This warning may be in addition to the lack of a click or a beep which would typically confirm to them that the vehicle has indeed locked (operators are already accustomed to hearing a click or getting a confirmation beep, and the lack of such confirmation warns an operator the vehicle has not locked). In such a scenario, the operator is reminded to remove the child or pet. In the event the operator didn't notice that the vehicle did not lock, then bystanders noticing that the child or the pet is enclosed within the vehicle under extreme environmental conditions may easily extricate the child or the pet from the unlocked vehicle without damaging the vehicle.

Upon vehicles being set in motion (e.g., movement above a threshold speed), some vehicles may automatically enable vehicle lock actuators for locking the vehicle doors. Alternatively, the vehicle operator may manually lock the vehicle doors for added sense of personal safety. In these example scenarios, the vehicle lock actuators may be in an enabled or locked state. Thus, when one or more of the vehicle lock actuators (e.g., actuators associated with a passenger zone) are in an enabled or locked state and the vehicle is in a non-driver occupied mode, to prevent locking of vehicle doors, at operation 350, the processor may disable vehicle lock actuators by unlocking the vehicle doors. Further, when, at operation 350, the processor disables vehicle lock actuators by unlocking the vehicle doors, the processor can activate a distinct audible or visual indicator to indicate that the vehicle lock actuators have been altered to unlock the vehicle doors.

In some examples, in response to disabling the vehicle lock actuators, the processor can activate an audible or a visual indicator to indicate that the vehicle lock actuators are disabled (e.g., vehicle cannot be locked) and to indicate that a non-driver occupant is likely still occupying the passenger zone. Continuing with the above described example, if the caregiver / vehicle operator exits the operator zone 280 (FIG. 1), unintentionally leaves the child or the pet in the second passenger zone 282b (FIG. 2), and attempts to lock the vehicle using an wireless electronic vehicle key fob while walking away from the vehicle, the vehicle management system 110 can activate a horn or flashing lights to remind the caregiver that the child or pet is in the second passenger zone 282b. In further examples where a mobile device, such as a smart phone, acts as a vehicle key, at operation 350, the vehicle management system 110 can transmit a signal representing an alert to the mobile device (e.g., remote device 180) for alerting the vehicle operator of the non-driver occupied mode.

In some examples, the vehicle may be an autonomous or self-driving vehicle. Although the vehicle may be autonomous or self-driving, a passenger may be seated in the operator zone. In this scenario, when the passenger in the operator zone exits the vehicle and in response to determining that the vehicle is in the non-driver occupied mode (e.g., passengers still remain in the passenger zone), the vehicle management system may halt the vehicle and prevent the vehicle from leaving the current location to prevent leaving a child or pet behind in the vehicle. Further, in the scenario where the autonomous vehicle does not have a designated operator zone but is instructed to transport passengers to a specified location, upon arriving at the specified location, the vehicle management system may halt the vehicle and prevent the vehicle from leaving the specified location until passengers (e.g., human occupants or pets) are no longer detected in the passenger zone.

In some examples, at operation 350, the processor may disable vehicle lock actuators on the condition that the vehicle lock request signal is received. According to the invention, the vehicle lock request is received from an electronic vehicle key, having a short-range communication link with the vehicle management system 110. In some other examples, which are not part of the present invention the vehicle lock request can be received from a door handle sensor for receiving a signal to lock the vehicle or can be received from a vehicle keypad for receiving a signal to lock the vehicle.

In some examples, it may be desirable to disable vehicle lock actuators in the specific scenario that: (i) the vehicle is in the non-driver occupied mode and (ii) when the vehicle lock request signal is received from a wireless electronic vehicle key. Receiving the vehicle lock request signal from the wireless electronic vehicle key can indicate that the vehicle operator has exited the operator zone and is moving away from the vehicle.

Alternatively, if the vehicle lock request signal is received from a push button interface within the vehicle, an adult passenger occupying a seat in the first passenger zone 282a (FIG. 2) may desire to lock the vehicle doors for a greater sense of security while a vehicle operator may have exited the vehicle (e.g., to run into a convenience store for a short time). Thus, in some examples not part of the present invention, at operation 350, the processor may be configured to (1) disable vehicle lock actuators while the vehicle is in the non-driver occupied mode only when a vehicle lock request signal is received from a wireless electronic vehicle key; and (2) not disable vehicle lock actuators when a vehicle lock request signal is received from a push button from within the vehicle.

The method 300 of FIG. 3 reduces the likelihood that the child or the pet is unintentionally trapped or locked within a vehicle. Further, in the scenario that (a) no bystander notices the child within the vehicle; and (b) the child is an infant unable to open the vehicle door (e.g., infant child may be too young to take action or may be secured within a safety or booster seat), it is desirable that the vehicle management system 110 further operate to reduce the effects of the unsafe vehicle interior conditions.

For example, in response to identifying that the vehicle is in a non-driver occupied mode, the processor can monitor using a thermal sensor the vehicle interior temperature at periodic points in time. In response to determining that the vehicle interior temperature exceeds a threshold temperature, the processor activates at least one window actuator for opening a vehicle window. In another example, in response to determining that the vehicle interior temperature decreases below a cold threshold temperature, the processor can activate a vehicle heating component for heating the vehicle interior. Activating the vehicle heating component can include periodically starting the vehicle for turning on the vehicle heating system. Thus, the vehicle management system 110 can take additional steps for preventing risks associated with the unsafe vehicle interior conditions.

The method 300 of FIG. 3 provides example operations for disabling vehicle lock actuators to prevent locking of vehicle doors when a vehicle lock request signal is received and while the vehicle is in the non-driver occupied mode. In some scenarios, however, it may be desirable to lock the vehicle doors despite the vehicle being loaded with inanimate objects that satisfy conditions for the processor identifying the non-driver occupied mode.

For example, if the vehicle is loaded with heavy cargo that exceeds the occupant weight threshold, the vehicle management system 110 will determine that the passenger zone is occupied based on the weight of the cargo in the passenger zone. Therefore, (a) when the cargo is in the vehicle; (b) when the vehicle operator exits the vehicle; and (c) when the vehicle operator attempts to lock the vehicle, operations of the method 300 will disable, at operation 350, the vehicle lock actuators to prevent locking of vehicle doors. The method 300 of FIG. 3 may promulgate an unintended result that can increase the risk of vehicle or vehicle cargo theft. Thus, it is desirable to provide a vehicle lock actuator override signal for a vehicle management system that may rely solely on seat weight sensors, for example, for detecting passenger zone occupancy. Additionally, irrespective of what sensors are used for detecting vehicle occupancy, it may be desirable to provide a vehicle lock actuator override signal when the vehicle operator desires to temporarily disable the methods described herein for managing vehicle lock requests. Such an override signal may be provided by the operator performing a long press or a pattern of short/long presses on the lock button.

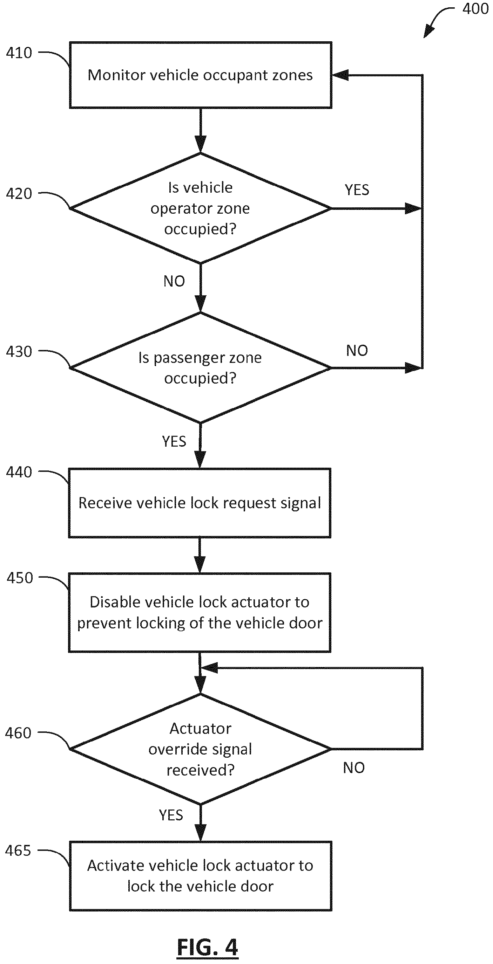

Reference is made to FIG. 4, which illustrates, in flowchart form, a method 400 of operating the vehicle management system 110 (FIG. 1) for managing lock requests for vehicles, in accordance with the present invention. The method 400 includes operations carried out by one or more processors of the vehicle management system 100. The method 400 may be implemented, at least in part, through processor-executable instructions of the occupancy manager 112 (FIG. 1). In some examples, one or more operations are implemented via processor-executable instructions in other applications or an operating system stored and executed in memory of the vehicle communication system 110. As described, the vehicle includes an operator zone 280 (FIG. 2) and one or more passenger zones 282a, 282b (FIG. 2).

Operations 410, 420, 430, 440, and 450 may be similar to operations 310, 320, 330, 340, and 350 of the method 300 of FIG. 3. That is, at operation 410, the processor monitors occupant zones. At operation 420, the processor determines whether the vehicle operator zone is occupied. When the processor determines the vehicle operator zone is occupied, the processor continues, at operation 410, to monitor the occupant zones via the sensors or system inputs described herein. When the processor detects that the operator zone is unoccupied, at operation 430, the processor determines whether the passenger zone is occupied. When the passenger zone is unoccupied, the processor continues to monitor the occupant zones for changes in occupancy status. When the passenger zone is occupied while the operator zone is unoccupied, the processor identifies that the vehicle is in a non-driver occupied mode. At operation 440, the processor receives a vehicle lock request signal. At operation 450, the processor disables the vehicle lock actuators to prevent locking of the vehicle doors.

As described herein, when the vehicle operator transmits a vehicle lock request signal to the vehicle management system, the vehicle operator may be accustomed to hearing a 'click' sound from vehicle door actuators or hearing an audible tone, such as a 'beep' sound for confirming that the vehicle doors are locked. However, when the processor identifies that the vehicle is in a non-driver occupied mode, the processor disables the vehicle lock actuators to prevent locking of the vehicle doors and the vehicle operator may not hear the 'click' or 'beep' sounds that she or he may be accustomed to and may be indirectly notified that the vehicle doors are not locked and the vehicle operator may attend to determine why the vehicle doors were not locked.

According to the present invention, when the processor identifies that the vehicle is in a non-driver occupied mode and when the processor receives a vehicle lock request signal, the processor provides a distinctive audible or visual alert for notifying the vehicle operator that the vehicle doors were not locked. The vehicle operator may, subsequently, attend to determine why the vehicle doors were not locked.

In some scenarios, the vehicle operator may have loaded the vehicle in a way such that the vehicle management system may identify that the vehicle is likely in a non-driver occupied mode when, in reality, the passenger zones may not be occupied by any person or pet. In an example described herein, when the vehicle management system 110 (FIG. 1) is configured to determine vehicle occupancy using seat weight sensors and when the vehicle operator has loaded the passenger zones with heavy cargo in a way that is similar to passengers occupying the passenger zones, the vehicle operator may nonetheless desire to lock the vehicle doors. It may be desirable to provide a door lock actuator signal for locking the vehicle doors in spite of the vehicle management system detecting a non-driver occupied mode.

At operation 460, the processor determines whether an actuator override signal is received. The processor receives the actuator override signal from an electronic vehicle key. Alternatively, in other examples not part of the invention the processor can receive the actuator override signal from a keypad, or a vehicle door handle sensor. The actuator override signal is different than the vehicle lock request signal. For instance, in other examples not part of the invention an actuator override signal received at the vehicle door handle sensor can consist of a different number of finger taps than the number of finger taps for a vehicle lock request signal. An actuator override signal is initiated by a button on an electronic vehicle key that is different than another button on the electronic vehicle key for a vehicle lock request signal.

When the processor override signal is received, the processor, at operation 465, can activate one or more vehicle lock actuators to lock corresponding vehicle doors irrespective of the prior detected vehicle occupancy state.

When the processor, at operation 460, does not detect an actuator override signal, the processor does not activate vehicle lock actuators, thereby sustaining the vehicle lock actuator state (e.g., disabled/unlocked) established at operation 450.

The foregoing inventive method 400 of FIG. 4 is useful for allowing the vehicle operator to override vehicle management system operations that otherwise would prevent locking of vehicle doors during situations when the vehicle detects conditions that likely (but potentially erroneously) indicates one or more non-operator passengers (e.g., a child or pet) occupying the vehicle when the vehicle operator is away from the vehicle.

In some examples, the vehicle operator may desire to globally disable methods described herein for disabling vehicle lock actuators to prevent locking of vehicle doors. That is, the vehicle operator may want to temporarily disable the methods described herein, thereby alleviating the vehicle operator from asserting the actuator override signal while the vehicle, for example, is loaded with inanimate objects. In this specific scenario, the vehicle management system can be configured to receive, at an input module of the vehicle, a signal to temporarily activate vehicle lock actuators to lock vehicle doors irrespective of detected vehicle occupancy states. In the present example, the vehicle management system can be further configured to receive, at the input module of the vehicle, a re-enable signal when the vehicle operator desires to resume methods of managing vehicle lock requests described herein.

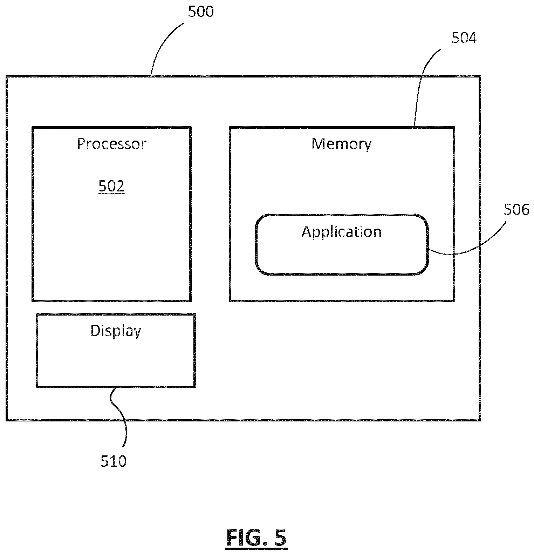

Reference is now made to FIG. 5, which illustrates, in simplified block diagram form, a vehicle management system 500, in accordance with an example of the present application. The vehicle management system 500 includes one or more processors 502 and memory 504. The memory 504 stores processor-executable software, such as an occupancy manager 506, that contains instructions implementing the example operations of the vehicle management system 110 (FIG. 1) described herein. The vehicle management system 500 can include a display interface 510 or a display for providing visual output to a vehicle occupant. Further, the vehicle management system 500 includes a plurality of sensors, such as safety belt sensors, seat sensors, imaging sensors, and one or more door actuators for locking respective vehicle doors (not illustrated), similar to the vehicle management system 110 of FIG. 1.

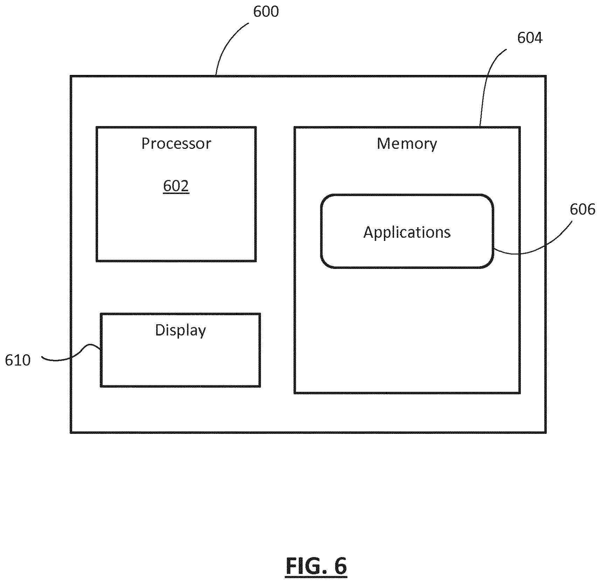

Reference is now made to FIG. 6, which illustrates, in simplified block diagram form, a remote device 600, in accordance with an example of the present application. The remote device 600 is an electronic vehicle key. In some other examples not part of the present invention, the remote device 600 is a tablet computer, a wearable computing device, or other type of computing device that is configured to store data or computer software instructions, and execute software instructions to perform example operations described herein, such as transmitting a vehicle lock request or transmitting an actuator override signal.

The remote device 600 includes a processor 602 and memory 604. The memory 604 stores processor-executable instructions in the form of software. The software can include an operating system to provide basic device functions and include application software 606 performing example operations for interacting with example vehicle management systems described herein. In some examples, the remote device 600 can include a display 610 for displaying information received from example vehicle management systems relating to vehicle engine health and other vehicle status indicators.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of operating a vehicle management system (110) in a vehicle (200), the vehicle including an operator zone (280) and a passenger zone (282a, 282b), the method comprising:
detecting that the operator zone is unoccupied;
determining that the passenger zone is occupied while the operator zone is unoccupied to identify that the vehicle is in a non-driver occupied mode;
receiving, from an electronic key of the vehicle, a vehicle lock request signal, the vehicle lock request signal sent in response to pressing of a first button on the electronic key of the vehicle; and
in response to receiving the vehicle lock request signal while the vehicle is in the non-driver occupied mode,
disabling a vehicle lock actuator (140, 140a, 140b, 140n) of the vehicle to prevent locking of a door of the vehicle;
and providing an audible or visual alert for notifying the vehicle operator of the non-driver occupied mode;
receiving, from the electronic key of the vehicle, an actuator override signal allowing the lock actuator of the vehicle to operate irrespective of vehicle occupancy state, the actuator override signal sent in response to pressing
of
a second button on the electronic key of the vehicle, the second button being different than the first button; and
in response to receiving the actuator override signal, activating the lock actuator of the vehicle to lock the door of the vehicle.

2. The method of claim 1, wherein the vehicle includes an imaging device (160, 260) for capturing images of the operator zone (280) and the passenger zone (282a, 282b), wherein the method further comprises:
capturing one or more images of the operator zone and the passenger zone in the vehicle; and
determining using the one or more captured images whether the operator zone or the passenger zone is occupied using image recognition or motion detection.

3. The method of any preceding claim, wherein the vehicle includes a thermographic camera, and wherein the method further comprises determining whether the operator zone or the passenger zone is occupied by infrared thermography operations based on captured thermal images.

4. The method of any preceding claim, wherein determining that the passenger zone is occupied includes determining that the door of the vehicle associated with the passenger zone is opened and, subsequently, closed prior to starting an engine of the vehicle.

5. The method of any preceding claim, wherein the vehicle includes a seat weight sensor (130a, 130b, 130c, 130n), and wherein determining that the passenger zone is occupied includes determining using the seat weight sensor that an object weight in the passenger zone exceeds an occupant weight threshold.

6. The method of claim 5, wherein the vehicle includes a safety belt engagement sensor (120, 120a, 120b, 120c, 120n) for determining whether the passenger zone is occupied, and wherein determining that the passenger zone is occupied further includes determining that a safety belt tongue is received within a corresponding safety belt buckle.

7. The method of any preceding claim, wherein detecting that the operator zone is unoccupied includes detecting that an operator access door associated with the operator zone is opened and, subsequently, closed after an engine of the vehicle transitions from an operating mode to a shutdown mode.

8. The method of any preceding claim, further comprising, in response to disabling the lock actuator of the vehicle, activating at least one of an audible or a visual indicator to indicate that a passenger is determined to be occupying the passenger zone.

9. The method of any preceding claim, wherein the passenger zone includes a plurality of sub-zones, and wherein determining that the passenger zone is occupied when at least one of the sub-zones is determined to be occupied.

10. The method of any preceding claim, further comprising:
in response to identifying that the vehicle is in a non-driver occupied mode, determining an interior temperature of the vehicle over a period of time; and
activating a window actuator for opening a window of the vehicle upon determining that the interior temperature of the vehicle exceeds a threshold temperature.

11. The method of any preceding claim, further comprising:
in response to identifying that the vehicle is in a non-driver occupied mode, determining an interior temperature of the vehicle over a period of time; and
activating a heating component of the vehicle for heating the vehicle interior upon determining that the interior temperature of the vehicle decreases below a cold threshold temperature.

12. A vehicle management system (110) in a vehicle, the vehicle including an operator zone (280) and a passenger zone, the vehicle management system comprising:
a processor;
a memory coupled to the processor;
a lock actuator coupled to the processor for locking a door of the vehicle; and
an occupancy manager (112) including processor-executable instructions stored in the memory that, when executed, cause the processor to carry out the method of any preceding claim.

13. A computer program for operating a vehicle management system (110) in a vehicle, the vehicle including an operator zone (280) and a passenger zone (282a, 282b), wherein the computer program, when executed by a processor of the vehicle management system, causes the vehicle management system to carry out the method of any one of claims 1 to 11.

## Patentansprüche

1. Ein Verfahren zum Operieren eines Fahrzeugverwaltungssystems (110) in einem Fahrzeug (200), wobei das Fahrzeug einen Operatorbereich (280) und einen Passagierbereich (282a, 282b) umfasst, wobei das Verfahren Folgendes beinhaltet:
Erfassen, dass der Operatorbereich nicht besetzt ist;
Bestimmen, dass der Passagierbereich besetzt ist, während der Operatorbereich nicht besetzt ist, um zu identifizieren, dass sich das Fahrzeug in einem nicht durch den Fahrer besetzten Modus befindet;
Empfangen, von einem elektronischen Schlüssel des Fahrzeugs, eines Fahrzeugverriegelungsanforderungssignals, wobei das
Fahrzeugverriegelungsanforderungssignal als Reaktion auf das Drücken eines ersten Knopfs auf dem elektronischen Schlüssel des Fahrzeugs gesendet wird; und
als Reaktion auf das Empfangen des Fahrzeugverriegelungsanforderungssignals,
während sich das Fahrzeug in dem nicht durch den Fahrer besetzten Modus befindet,
Deaktivieren eines Fahrzeugverriegelungsaktuators (140, 140a, 140b, 140n) des Fahrzeugs, um das Verriegeln einer Tür des Fahrzeugs zu verhindern;
und Bereitstellen einer hörbaren oder sichtbaren Warnung zum Benachrichtigen des Operators des Fahrzeugs über den nicht durch den Fahrer besetzten Modus;
Empfangen, von dem elektronischen Schlüssel des Fahrzeugs, eines Aktuatoreingriffssignals, das dem Verriegelungsaktuator des Fahrzeugs ermöglicht, unabhängig von dem Besetzungszustand des Fahrzeugs zu operieren, wobei das Aktuatoreingriffssignal als Reaktion auf das Drücken eines zweiten Knopfs auf dem elektronischen Schlüssel des Fahrzeugs gesendet wird, wobei sich der zweite Knopf von dem ersten Knopf unterscheidet; und
als Reaktion auf das Empfangen des Aktuatoreingriffssignals, Aktivieren des Verriegelungsaktuators des Fahrzeugs, um die Tür des Fahrzeugs zu verriegeln.

2. Verfahren gemäß Anspruch 1, wobei das Fahrzeug eine Bildgebungsvorrichtung (160, 260) umfasst, um Bilder des Operatorbereichs (280) und des Passagierbereichs (282a, 282b) zu erfassen, wobei das Verfahren ferner Folgendes beinhaltet:
Erfassen eines oder mehrerer Bilder des Operatorbereichs und des Passagierbereichs in dem Fahrzeug; und
Bestimmen, unter Verwendung des einen oder der mehreren erfassten Bilder, ob der Operatorbereich oder der Passagierbereich besetzt ist, unter Verwendung von Bilderkennung oder Bewegungserfassung.

3. Verfahren gemäß einem der vorhergehenden Ansprüche, wobei das Verfahren eine thermographische Kamera umfasst, und wobei das Verfahren ferner das Bestimmen beinhaltet, ob der Operatorbereich oder der Passagierbereich basierend auf erfassten Wärmebildern durch Infrarotthermographieoperationen besetzt ist.

4. Verfahren gemäß einem der vorhergehenden Ansprüche, wobei das Bestimmen, dass der Passagierbereich besetzt ist, das Bestimmen umfasst, dass die Tür des Fahrzeugs, das mit dem Passagierbereich assoziiert ist, geöffnet ist, und in der Folge vor dem Starten eines Motors des Fahrzeugs geschlossen ist.

5. Verfahren gemäß einem der vorhergehenden Ansprüche, wobei das Fahrzeug einen Sitzgewichtssensor (130a, 130b, 130c, 130n) umfasst und wobei das Bestimmen, dass der Passagierbereich besetzt ist, das Bestimmen umfasst, unter Verwendung des Sitzgewichtssensors, das ein Objektgewicht in dem Passagierbereich einen Schwellenwert eines Besetzergewichts übersteigt.

6. Verfahren gemäß Anspruch 5, wobei das Fahrzeug einen Sicherheitsgurteingriffssensor (120, 120a, 120b, 120c, 120n) umfasst, um zu bestimmen, ob der Passagierbereich besetzt ist, und wobei das Bestimmen, dass der Passagierbereich besetzt ist, ferner das Bestimmen umfasst, dass eine Sicherheitsgurtzunge innerhalb einer entsprechenden Sicherheitsgurtschnalle empfangen wird.

7. Verfahren gemäß einem der vorhergehenden Ansprüche, wobei das Erfassen, dass der Operatorbereich nicht besetzt ist, das Erfassen umfasst, dass eine Operatorzugangstür, die mit dem Operatorbereich assoziiert ist, geöffnet ist und in der Folge geschlossen ist, nachdem ein Motor des Fahrzeugs von einem Operationsmodus in einen Abschaltmodus übergeht.

8. Verfahren gemäß einem der vorhergehenden Ansprüche, ferner beinhaltend, als Reaktion auf das Deaktivieren des Verriegelungsaktuators des Fahrzeugs, Aktivieren mindestens eines hörbaren oder sichtbaren Anzeigers, um anzuzeigen, dass ein Passagier bestimmt ist, den Passagierbereich zu besetzten.

9. Verfahren gemäß einem der vorhergehenden Ansprüche, wobei der Passagierbereich eine Vielzahl von Unterbereichen umfasst, und wobei bestimmt wird, dass der Passagierbereich besetzt ist, wenn bestimmt ist, dass mindestens einer der Unterbereiche besetzt ist.

10. Verfahren gemäß einem der vorhergehenden Ansprüche, das ferner Folgendes beinhaltet:
als Reaktion auf das Identifizieren, dass sich das Fahrzeug in einem nicht durch einen Fahrer besetzten Modus befindet, Bestimmen einer Innenraumtemperatur des Fahrzeugs über einen Zeitraum; und
Aktivieren eines Fensteraktuators zum Öffnen eines Fensters des Fahrzeugs beim Bestimmen, dass die Innentemperatur eines Fahrzeugs eine Schwellenwerttemperatur übersteigt.

11. Verfahren gemäß einem der vorhergehenden Ansprüche, das ferner Folgendes beinhaltet:
als Reaktion auf das Identifizieren, dass sich das Fahrzeug in einem nicht durch einen Fahrer besetzten Modus befindet, Bestimmen einer Innenraumtemperatur des Fahrzeugs über einen Zeitraum; und
Aktivieren einer Heizkomponente des Fahrzeugs zum Heizen des Innenraums des Fahrzeugs beim Bestimmen, dass die Innenraumtemperatur des Fahrzeugs unter eine kalte Schwellenwerttemperatur fällt.

12. Ein Fahrzeugverwaltungssystem (110) in einem Fahrzeug, wobei das Fahrzeug einen Operatorbereich (280) und einen Passagierbereich umfasst, wobei das Fahrzeugverwaltungssystem Folgendes beinhaltet:
einen Prozessor;
einen Speicher, der mit dem Prozessor gekoppelt ist;
einen Verriegelungsaktuator, der mit dem Prozessor gekoppelt ist, um eine Tür des Fahrzeugs zu verriegeln; und
einen Besetzungsverwalter (112), der durch den Prozessor ausführbare Anweisungen umfasst, die in dem Speicher gespeichert sind, die, wenn sie ausgeführt werden, bewirken, dass der Prozessor das Verfahren gemäß einem vorhergehenden Anspruch ausführt.

13. Ein Computerprogramm zum Operieren eines Fahrzeugverwaltungssystems (110) in einem Fahrzeug, wobei das Fahrzeug einen Operatorbereich (280) und einen Passagierbereich (282a, 282b) umfasst, wobei das Computerprogramm, wenn es durch einen Prozessor des Fahrzeugverwaltungssystems ausgeführt wird, bewirkt, dass das Fahrzeugverwaltungssystem das Verfahren gemäß einem der Ansprüche 1 bis 11 ausführt.

## Revendications

1. Un procédé d'exploitation d'un système de gestion de véhicule (110) dans un véhicule (200), le véhicule incluant une zone opérateur (280) et une zone passagers (282a, 282b), le procédé comprenant :
la détection du fait que la zone opérateur est inoccupée ;
la détermination du fait que la zone passagers est occupée alors que la zone opérateur est inoccupée afin d'identifier que le véhicule est dans un mode non occupé par un conducteur ;
la réception, en provenance d'une clé électronique du véhicule, d'un signal de demande de verrouillage de véhicule, le signal de demande de verrouillage de véhicule ayant été envoyé en réponse à une pression exercée sur un premier bouton sur la clé électronique du véhicule ; et
en réponse à la réception du signal de demande de verrouillage de véhicule alors que le véhicule est en mode non occupé par un conducteur,
la neutralisation d'un actionneur de verrouillage de véhicule (140, 140a, 140b, 140n) du véhicule afin d'empêcher le verrouillage d'une porte du véhicule ;
et la fourniture d'une alerte audible ou visuelle pour la notification à l'opérateur du véhicule du mode non occupé par un conducteur ;
la réception, en provenance de la clé électronique du véhicule, d'un signal d'annulation pour actionneur permettant à l'actionneur de verrouillage du véhicule de fonctionner quel que soit l'état d'occupation du véhicule, le signal d'annulation pour actionneur ayant été envoyé en réponse à une pression exercée sur un deuxième bouton sur la clé électronique du véhicule, le deuxième bouton étant différent du premier bouton ; et
en réponse à la réception du signal d'annulation pour actionneur, l'activation de l'actionneur de verrouillage du véhicule afin de verrouiller la porte du véhicule.

2. Le procédé de la revendication 1, dans lequel le véhicule inclut un dispositif d'imagerie (160, 260) pour la capture d'images de la zone opérateur (280) et de la zone passagers (282a, 282b), le procédé comprenant en outre :
la capture d'une ou plusieurs images de la zone opérateur et de la zone passagers dans le véhicule ; et
la détermination à l'aide des une ou plusieurs images capturées quant à savoir si la zone opérateur ou la zone passagers est occupée à l'aide d'une reconnaissance d'images ou d'une détection de mouvement.

3. Le procédé de n'importe quelle revendication précédente, dans lequel le véhicule inclut une caméra thermographique, et dans lequel le procédé comprend en outre la détermination quant à savoir si la zone opérateur ou la zone passagers est occupée par des opérations de thermographie infrarouge sur la base d'images thermiques capturées.

4. Le procédé de n'importe quelle revendication précédente, dans lequel la détermination du fait que la zone passagers est occupée inclut la détermination du fait que la porte du véhicule associée à la zone passagers est ouverte et, par la suite, fermée préalablement au démarrage d'un moteur du véhicule.

5. Le procédé de n'importe quelle revendication précédente, dans lequel le véhicule inclut un capteur de poids sur siège (130a, 130b, 130c, 130n), et dans lequel la détermination du fait que la zone passagers est occupée inclut la détermination à l'aide du capteur de poids sur siège du fait que le poids d'un objet dans la zone passagers dépasse un seuil de poids d'occupant.

6. Le procédé de la revendication 5, dans lequel le véhicule inclut un capteur d'enclenchement de ceinture de sécurité (120, 120a, 120b, 120c, 120n) pour la détermination quant à savoir si la zone passagers est occupée, et dans lequel la détermination du fait que la zone passagers est occupée inclut en outre la détermination du fait que la languette d'une ceinture de sécurité est reçue au sein d'une attache de ceinture de sécurité correspondante.

7. Le procédé de n'importe quelle revendication précédente, dans lequel la détection du fait que la zone opérateur est inoccupée inclut la détection du fait qu'une porte d'accès d'opérateur associée à la zone opérateur est ouverte et, par la suite, fermée après qu'un moteur du véhicule est passé d'un mode fonctionnement à un mode arrêt.

8. Le procédé de n'importe quelle revendication précédente, comprenant en outre, en réponse à la neutralisation de l'actionneur de verrouillage du véhicule, l'activation d'au moins un indicateur parmi un indicateur audible et un indicateur visuel afin d'indiquer qu'il a été déterminé qu'un passager occupe la zone passagers.

9. Le procédé de n'importe quelle revendication précédente, dans lequel la zone passagers inclut une pluralité de sous-zones, et dans lequel la détermination du fait que la zone passagers est occupée est faite lorsqu'il est déterminé qu'au moins l'une des sous-zones est occupée.

10. Le procédé de n'importe quelle revendication précédente, comprenant en outre :
en réponse à l'identification du fait que le véhicule est dans un mode non occupé par un conducteur, la détermination d'une température intérieure du véhicule pendant une durée ; et
l'activation d'un actionneur de fenêtre pour l'ouverture d'une fenêtre du véhicule lorsqu'il est déterminé que la température intérieure du véhicule dépasse un seuil de température.

11. Le procédé de n'importe quelle revendication précédente, comprenant en outre :
en réponse à l'identification du fait que le véhicule est dans un mode non occupé par un conducteur, la détermination d'une température intérieure du véhicule pendant une durée ; et
l'activation d'un composant de chauffage du véhicule pour le chauffage de l'intérieur du véhicule lorsqu'il est déterminé que la température intérieure du véhicule tombe en dessous d'une température seuil de froid.

12. Un système de gestion de véhicule (110) dans un véhicule, le véhicule incluant une zone opérateur (280) et une zone passagers, le système de gestion de véhicule comprenant :
un processeur ;
une mémoire couplée au processeur ;
un actionneur de verrouillage couplé au processeur pour le verrouillage d'une porte du véhicule ; et
un gestionnaire d'occupation (112) incluant des instructions exécutables par un processeur stockées dans la mémoire qui, lorsqu'elles sont exécutées, amènent le processeur à mettre en oeuvre le procédé de n'importe quelle revendication précédente.

13. Un programme d'ordinateur pour exploiter un système de gestion de véhicule (110) dans un véhicule, le véhicule incluant une zone opérateur (280) et une zone passagers (282a, 282b), le programme d'ordinateur, lorsqu'il est exécuté par un processeur du système de gestion de véhicule, amenant le système de gestion de véhicule à mettre en oeuvre le procédé de l'une quelconque des revendications 1 à 11.
